# EUROPÄISCHE PATENTSCHRIFT

(11) **EP 2 518 334 B1**
(45) Veröffentlichungstag und Bekanntmachung des Hinweises auf die Patenterteilung: **26.06.2013**
(21) Anmeldenummer: 11003502.9
(22) Anmeldetag: 28.04.2011
(51) Int. Cl.: F16B 4/00, H02K 15/14

(54) **Elektromotor mit Einbaueinheit und Verfahren zum Verbinden eines Elektromotors mit einer Anbaueinheit**
Electric motor with installation unit and method for connecting an electric motor with an extension unit
Moteur électrique doté d'une unité d'intégration et procédé de liaison d'un moteur électrique et d'une unité d'intégration

(43) Veröffentlichungstag der Anmeldung: 31.10.2012
(73) Patentinhaber: Maxon Motor AG, 6072 Sachseln (CH)
(72) Erfinder: Suzuki, Tsuneo, 78087 Mönchweiler (DE); Neumann, Joachim, 79256 Buchenbach (DE); Stricker, Wolfgang, 79211 Denzlingen (DE); Frey, Dominik, 79211 Denzlingen (DE)
(74) Vertreter: Grünecker, Kinkeldey, Stockmair & Schwanhäusser

(56) Entgegenhaltungen:
- DE-A1-102009 000 169
- DE-U1- 8 803 570
- FR-A1- 2 658 284
- US-A1- 2008 136 277

## Beschreibung

Die vorliegende Erfindung bezieht sich auf einen Elektromotor mit einer Anbaueinheit gemäß dem Oberbegriff des unabhängigen Anspruchs 1. Ferner bezieht sich die Erfindung auch auf ein Verfahren zum Verbinden eines Elektromotors mit einer Anbaueinheit gemäß dem Oberbegriff des unabhängigen Anspruchs 10.

Elektromotoren werden nach heutigen Anforderungen oft mit einer Anbaueinheit verwendet, die fest mit dem Elektromotor verbunden ist. Beispielsweise ist es in vielen Fällen erforderlich, den Elektromotor mit einer fest verbundenen Getriebeeinheit auszustatten, um bei kompakter Bauweise das geforderte Drehmoment bereitstellen zu können. Auch sind oft weitere Anbaueinheiten, wie beispielsweise Encodereinheiten oder Controllereinheiten fest mit dem Elektromotor verbunden. Elektromotor und Anbaueinheit bilden zusammen eine Baugruppe, die selbst eine Einheit darstellt und als solche hergestellt, verkauft und auch eingesetzt wird.

Aus dem Stand der Technik sind mehrere Arten der Verbindung zwischen Elektromotor und Anbaueinheit bekannt. Gängig ist es beispielsweise, das Gehäuse einer Anbaueinheit, beispielsweise eines Getriebes, mit dem Elektromotor zu verschrauben, zu verstemmen oder zu verschweißen. Diese Verbindungsarten sind entweder teuer oder führen zu radialen Verformungen der verbundenen Bauteile. Sofern Elektromotor und Anbaueinheit miteinander verschraubt werden, besteht zwar keine Gefahr einer Verformung, jedoch erfordert diese Art der Verbindung jeweils einen Verbindungsflansch an Elektromotor und Anbaueinheit, wodurch das benötigte Bauvolumen insbesondere in radialer Richtung relativ groß ist. Gerade wenn Elektromotor und Anbaueinheit miteinander verschraubt werden, gestaltet sich die Montage äußerst aufwendig und ist zudem sehr teuer. Dies liegt darin begründet, dass die Bohrungen in den beiden Flanschen äußerst präzise vorgenommen werden müssen und die verwendeten Schrauben als zusätzliche Bauteile das Endprodukt verteuern. Gerade bei Kleinmotoren und Kleinstmotoren scheidet eine Verschraubung des Elektromotors mit einer Anbaueinheit aus den oben genannten Gründen, insbesondere aufgrund des erhöhten Bauvolumens, oft aus.

Ferner ist aus dem Stand der Technik bekannt, eine Verbindung zwischen Elektromotor und Anbaueinheit mittels einer Schnappverbindung herbeizuführen. Beispielsweise ist aus DE 19729988 C1 eine formschlüssige Verbindung zwischen einem Getriebegehäuseteil aus Kunststoff und einer Adapterplatte eines Elektromotors bekannt. Dort bildet das Hohlrad eines Planetengetriebes das mit dem Elektromotor verbundene Getriebegehäuseteil. Die mit dem Elektromotor verbundene Adapterplatte kann derart in das Hohlrad eingeschoben werden, dass der zylindrische Außenumfang der Adapterplatte flächig an dem Innenumfang des Hohlrades anliegt. Die Adapterplatte umfasst ferner mehrere über den Umfang verteilte Rastnasen, die in entsprechende Rastöffnungen des Hohlrades eingreifen. Beim Ineinanderstecken der beiden Bauteile wird das aus Kunststoff bestehende Hohlrad aufgeweitet und kehrt erst dann in seinen unverformten Zustand zurück, wenn die Rastnasen in die Rastöffnungen eingeschnappt sind.

Die aus DE 19729988 C1 bekannte Verbindung eignet sich daher nur, wenn eines der beiden zu verbindenden Bauteile aus Kunststoff gefertigt ist und somit eine geringere Stabilität als beispielsweise eine Metallkomponente aufweist.

Aus DE 102009032088 A1 ist eine weitere Schnappverbindung zwischen Elektromotor und Anbaueinheit bekannt, die nicht auf den Einsatz von Komponenten aus Kunststoff beschränkt ist. Hier kommt ein einfach geschlitzter radialelastischer Federring zum Einsatz, der sowohl in einer umlaufenden Nut einer Außenwandung des ersten Bauteils als auch in einer umlaufenden Nut einer Innenwandung des zweiten Bauteils sitzt. Die Anschlussflansche von Elektromotor und Anbaueinheit müssen demnach unterschiedliche Außenabmessungen aufweisen.

Aufgabe der vorliegenden Erfindung ist es, eine alternative Verbindung zwischen Elektromotor und Anbaueinheit anzugeben, die eine kostengünstige und einfache Montage erlaubt und zudem einen äußerst stabilen Zusammenhalt zwischen Elektromotor und Anbaueinheit gewährleistet. Zudem soll das benötigte Bauvolumen der aus Elektromotor und Anbaueinheit bestehenden Baugruppe gering gehalten werden können. Ferner soll die alternative Verbindung sowohl bei unterschiedlichen Außenabmessungen als auch bei gleichen Außenabmessungen von Elektromotor und Anbaueinheit möglich sein. Die Verbindung soll sich insbesondere für die Montage einer Anbaueinheit mit einem Klein- oder Kleinstmotor eignen.

Die Aufgabe wird gelöst durch die Merkmale des unabhängigen Anspruchs 1. Demnach liegt bei einem Elektromotor der eingangs genannten Art eine erfindungsgemäße Lösung der Aufgabe vor, wenn zur festen Verbindung auf Elektromotor und Anbaueinheit im Bereich der Verbindungsstelle ein Schrumpfring thermisch aufgeschrumpft ist, sodass der Schrumpfring die Verbindungsstelle überdeckt. Der Schrumpfring umschließt sozusagen sowohl einen Abschnitt des Elektromotors als auch einen Abschnitt der an den Elektromotor angesetzten Anbaueinheit. Die erfindungsgemäße Lösung erfordert keine besondere Bearbeitung oder Bereitstellung von Anschlussflanschen. Der von außen aufgeschrumpfte Schrumpfring nimmt nicht besonders viel Bauraum ein und ermöglicht eine kostengünstige und schnelle Montage der zu verbindenden Bauteile. Die erfindungsgemäße Lösung eignet sich insbesondere bei Kleinmotoren und Kleinstmotoren, die ansonsten aufgrund der oft gewünschten Miniaturisierung mit der Anbaueinheit verstemmt oder verschweißt werden.

Vorteilhafte Ausgestaltungen der vorliegenden Erfindung sind Gegenstand der Unteransprüche.

In einer besonders bevorzugten Ausführungsform der vorliegenden Erfindung ist der Schrumpfring kraftschlüssig auf Elektromotor und Anbaueinheit aufgeschrumpft. Dies wird in der Regel dadurch erreicht, dass der Schrumpfring vor der Montage einen geringfügig kleineren Innendurchmesser aufweist als die Außendurchmesser von Elektromotor und Anbaueinheit im Bereich der Verbindungsstelle. Der Schrumpfring wird vor dem Zusammenfügen der Bauteile erhitzt, sodass er sich ausdehnt und auf Elektromotor sowie Anbaueinheit aufgeschoben werden kann. Nach dem Erkalten des Schrumpfrings liegt dieser unter Spannung an den überdeckten Bereichen von Elektromotor und Anbaueinheit an, wodurch die kraftschlüssige Verbindung erzeugt wird. Vorzugsweise sind sowohl Schrumpfring als auch Elektromotor und Anbaueinheit im Bereich der Verbindungsstelle zylindrisch bzw. hohlzylindrisch ausgeführt. Jedoch sind auch andere, von der Zylinderform abweichende Formen denkbar.

In einer weiteren Ausführungsform der vorliegenden Erfindung sind jeweils gleich breite Bereiche von Elektromotor und Anbaueinheit vom Schrumpfring überdeckt bzw. umschlossen. Dadurch ist ein gleichmäßig stabiler Zusammenhalt zwischen Elektromotor und Schrumpfring bzw. zwischen Anbaueinheit und Schrumpfring gewährleistet.

In einer weiteren Ausführungsform der vorliegenden Erfindung ist der Schrumpfring jeweils auf ein Gehäuseteil von Elektromotor und Anbaueinheit aufgeschrumpft, dadurch werden keine zusätzlichen Flansche auf Seiten des Elektromotors bzw. auf Seiten der Anbaueinheit benötigt.

In einer weiteren Ausführungsform der vorliegenden Erfindung ist der Schrumpfring auf einen Flansch des Elektromotors und ein Hohlrad einer Getriebeeinheit aufgeschrumpft. Hier wird zumindest getriebeseitig kein zusätzliches Verbindungsbauteil benötigt. Der Flansch des Elektromotors kann entsprechend dem gewünschten Getriebe gewählt werden.

In einer weiteren besonders bevorzugten Ausführungsform der vorliegenden Erfindung sind Elektromotor und Anbaueinheit im Bereich der Verbindungsstelle umlaufend stufenförmig abgesetzt, wobei der Schrumpfring in den stufenförmigen Absätzen aufgenommen ist. Dies bietet den großen Vorteil, dass der Schrumpfring außen mit der Außenkontur von Elektromotor und Getriebe bzw. Anbaueinheit abschließen kann und nicht radial über Elektromotor und Anbaueinheit hinaus steht. Dadurch baut die aus Elektromotor und Anbaueinheit bestehende Baugruppe äußerst schmal. Auch ergeben sich keine störenden Kanten und Vorsprünge, die sowohl die Einsetzbarkeit als auch die Ästhetik der aus Elektromotor und Anbaueinheit bestehenden Baugruppe beeinträchtigen könnten.

In einer weiteren bevorzugten Ausführungsform der vorliegenden Erfindung sind die Innenseite des Schrumpfrings und/oder die vom Schrumpfring überdeckten Bereiche von Elektromotor und Anbaueinheit aufgeraut. Dadurch wird die Stabilität der Verbindung zwischen Schrumpfring und Elektromotor bzw. Anbaueinheit durch eine erhöhte Haftreibung verbessert.

In einer breiteren besonders bevorzugten Ausführungsform der vorliegenden Erfindung weisen der Schrumpfring und die vom Schrumpfring überdeckten Bereiche von Elektromotor und Anbaueinheit Formschlusselemente auf, wobei die Formschlusselemente des Schrumpfrings und die Formschlusselemente der überdeckten Bereiche ineinander greifen. Dadurch kann sowohl in axialer Richtung als auch in Umfangsrichtung ein Formschluss erzeugt werden, der die Stabilität der Verbindung zwischen Elektromotor und Anbaueinheit ebenfalls weiter erhöht. Formschlusselemente können auch vorgesehen sein, um die richtige Winkellage bei der Montage, also beim Zusammenfügen von Schrumpfring und Elektromotor bzw. Anbaueinheit, zu gewährleisten. Alternativ können auf Schrumpfring und Elektromotor bzw. Anbaueinheit auch nur Markierungen vorgesehen sein, die das Zusammenfügen unter Einhaltung der richtigen Winkellage begünstigen.

Ganz besonders bevorzugt kann vorgesehen sein, dass Elektromotor und Anbaueinheit jeweils eine umlaufende Nut aufweisen, in die jeweils eine entsprechende umlaufende Feder des Schrumpfrings eingreift. Dies gewährleistet einen Formschluss in axialer Richtung, der auch ohne Weiteres eine problemlose Montage ermöglicht.

In einer weiteren Ausführungsform der vorliegenden Erfindung weisen Elektromotor und Anbaueinheit zumindest im Bereich der Verbindungsstelle unterschiedliche Durchmesser auf, wobei der Schrumpfring einen an den Durchmesser des Elektromotors angepassten ersten Abschnitt und einen an den Durchmesser der Anbaueinheit angepassten zweiten Abschnitt aufweist. Dadurch ist auch eine Montage von Elektromotoren und Anbaueinheiten mit unterschiedlichen Durchmessern möglich.

In einer weiteren besonders bevorzugten Ausführungsform der vorliegenden Erfindung bestehen Elektromotor und Anbaueinheit zumindest im Bereich der Verbindungsstelle aus einem Material mit einem geringeren Wärmeausdehnungskoeffizienten als dem Wärmeausdehnungskoeffizienten des Materials des Schrumpfrings. Dadurch ist auch ein späteres Lösen der Verbindung zwischen Elektromotor und Anbaueinheit möglich. Aufgrund des geringeren Wärmeausdehnungskoeffizienten dehnen sich Elektromotor und Anbaueinheit bei erneuter Erwärmung des Schrumpfrings nicht im gleichen Maße aus wie der Schrumpfring selbst. Bei entsprechend hoher Temperatur lassen sich somit Elektromotor und Anbaueinheit aus dem Schrumpfring wieder herausziehen. Vorzugsweise bestehen Elektromotor und Anbaueinheit zumindest im Bereich der Verbindungsstelle aus Stahl, wobei der Schrumpfring aus Aluminium besteht. Bei dieser Materialkonstellation hat sich eine gute Lösbarkeit der Verbindung zwischen Elektromotor und Anbaueinheit bei erneuter Erwärmung des Schrumpfrings herausgesellt. Sofern eine zerstörungsfreie Wiederlösbarkeit der Verbindung nicht erforderlicht ist, kann auch der Schrumpfring aus Stahl bestehen. In diesem Fall kann der Schrumpfring äußerst dünn ausgeführt werden, und wird trotzdem den hohen Anforderungen an die Stabilität der Verbindung gerecht.

Die Erfindung stellt ferner ein Verfahren zum Verbinden eines Elektromotors mit einer Anbaueinheit bereit. Zur Verbindung von Elektromotor und Anbaueinheit wird erfindungsgemäß im Bereich der Verbindungsstelle ein Schrumpfring thermisch aufgeschrumpft, sodass der Schrumpfring die Verbindungsstelle überdeckt, indem der Schrumpfring auf der einen Seite und Elektromotor sowie Anbaueinheit auf der anderen Seite zunächst auf eine Temperaturdifferenz gebracht werden, wobei die Temperatur des Schrumpfrings größer ist als die Temperatur von Elektromotor und Anbaueinheit. Die Bauteile werden sodann zusammengefügt und gehalten, sodass der Schrumpfring auf Elektromotor und Anbaueinheit aufschrumpft.

In einer bevorzugten Ausführungsform der vorliegenden Erfindung ist das Innenmaß des aufzuschrumpfenden Schrumpfrings bei Raumtemperatur geringfügig kleiner als das jeweilige Außenmaß der vom Schrumpfring überdeckten Bereiche von Elektromotor und Anbaueinheit, wobei die Temperaturdifferenz so bemessen ist, dass der Unterschied zwischen dem Außenmaß der vom Schrumpfring überdeckten Bereiche und dem Innenmaß des Schrumpfrings nach Herstellen der Temperaturdifferenz zumindest soweit reduziert ist, dass der Schrumpfring auf Elektromotor und Anbaueinheit aufgeschoben werden kann. Dabei spielt es im Übrigen keine Rolle, ob der Schrumpfring auf die beiden zu verbindenden Bauteile aufgeschoben wird oder die beiden zu verbindenden Bauteile in den Schrumpfring eingeschoben werden.

Die Temperaturdifferenz kann so bemessen sein, dass das Innenmaß des Schrumpfrings immer noch kleiner ist als die Außenmaße von Elektromotor und Anbaueinheit. In diesem Fall muss eine entsprechend große Fügepresskraft aufgebracht werden. Die dafür erforderliche Energie kann jedoch geringer sein als die Energie, die benötigt würde, um eine ausreichend große Temperaturdifferenz zwischen den Bauteilen herzustellen, sodass zwischen Schrumpfring und Elektromotor bzw. Anbaueinheit ein Spiel besteht. Der für die Montage erforderliche Energieaufwand kann auf diese Weise optimiert werden. Jedoch ist es auch möglich, die Bauteile bei entsprechender Temperaturdifferenz unter einem gewissen Spiel zueinander zu fügen.

In einer besonders bevorzugten Ausführungsform der vorliegenden Erfindung beträgt die Temperaturdifferenz zwischen 100 und 300 °C. Bei einer Temperaturdifferenz in diesem Bereich hat sich eine besonders effiziente Montage, insbesondere bei Verwendung von Stahlschrumpfringen, herausgestellt. Ganz besonders bevorzugt beträgt die Temperaturdifferenz 175 °C.

In einer weiteren bevorzugten Ausführungsform der vorliegenden Erfindung wird der Schrumpfring zum Erreichen der Temperaturdifferenz aufgeheizt, wobei Elektromotor und Anbaueinheit bei Raumtemperatur bleiben. Dadurch ist lediglich eine Aufheizvorrichtung für den Schrumpfring erforderlich, wodurch das Verfahren besonders einfach und kostengünstig gehalten werden kann. Alternativ ist es sehr wohl möglich, Elektromotor und Anbaueinheit zu kühlen und den Schrumpfring gleichzeitig aufzuheizen.

Äußerst kostengünstig und einfach gestaltet sich der Montageprozess, wenn der Schrumpfring mittels Induktion aufgeheizt wird. Dies hat sich insbesondere bei Schrumpfringen aus Stahl als einfache und überdies besonders schnelle Art der Aufheizung herausgestellt. Die Herstellung der Verbindung zwischen Elektromotor und Anbaueinheit kann somit äußerst rasch bewerkstelligt werden. Vorzugsweise ist für die Erhitzung eine Induktionsspule vorgesehen, die den Schrumpfring vollständig umschließt. Allerdings eignet sich die Aufheizung mittels Induktion nicht für Schrumpfringe aus Aluminium. Hier bietet sich eine Aufheizung mittels Wärmeleitung an.

Bevorzugte Ausführungsbeispiele der vorliegenden Erfindung werden im Folgenden anhand von Zeichnungen näher erläutert.

Es zeigen:
- **Figur 1:**: einen Längsschnitt durch einen erfindungsgemäßen Elektromotor mit Anbaueinheit,
- **Figur 2:**: eine Explosionszeichnung des Längsschnitts aus Figur 1 in Schrägansicht,
- **Figur 3:**: eine abgewandelte Ansicht der Figur 2 zur Verdeutlichung des Verfahrens zum Verbinden von Elektromotor und Anbaueinheit,
- **Figur 4:**: eine Detailansicht der Verbindungsstelle zwischen Elektromotor und Anbaueinheit unmittelbar nach Aufheizung des Schrumpfrings und Fügen der Bauteile,
- **Figur 5:**: die Detailansicht aus Figur 4 nach Erkalten des Schrumpfrings,
- **Figur 6:**: eine Seitenansicht eines erfindungsgemäßen Elektromotors mit Anbaueinheit in einer Ausführung mit Formschluss in Umfangsrichtung, und
- **Figur 7:**: einen Längsschnitt eines weiteren erfindungsgemäßen Elektromotors mit Anbaueinheit.

Für die folgenden Ausführungen gilt, dass gleiche Teile mit gleichen Bezugszeichen bezeichnet werden.

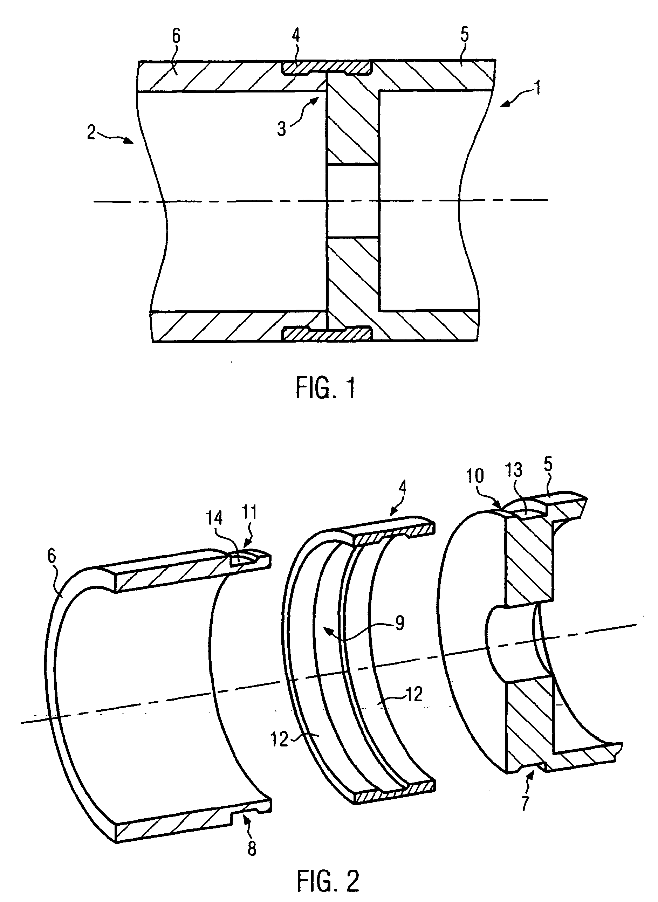

Figur 1 zeigt einen Längsschnitt durch einen erfindungsgemäßen Elektromotor 1 mit verbundener Anbaueinheit 2. Bei der Anbaueinheit kann es sich sowohl um ein Getriebe als auch um eine Encoder- bzw. Steuereinheit handeln. Vom Elektromotor 1 ist lediglich das Gehäuse 5 dargestellt, welches im Wesentlichen hohlzylindrisch ausgeführt ist. Auch von der Anbaueinheit 2 ist lediglich das Gehäuse 6 dargestellt. Auch das Gehäuse 6 der Anbaueinheit ist hohlzylindrisch ausgebildet und weist den gleichen Außendurchmesser auf wie das Gehäuse 5 des Elektromotors.

An der Verbindungsstelle 3 treffen jeweils eine Stirnseite von Motorgehäuse 5 und Gehäuse 6 der Anbaueinheit aufeinander. Die Stirnseiten können aneinander anliegen, müssen es aber nicht. Gehäuse 5 und Gehäuse 6 sind über den aufgeschrumpften Schrumpfring 4 miteinander verbunden. Der Schrumpfring 4 ist auf die überdeckten Bereiche 10 des Elektromotors und 11 der Anbaueinheit aufgeschrumpft. Die Bereiche 10 und 11 werden jeweils durch einen umlaufenden Streifen der Außenkontur von Elektromotorgehäuse und Gehäuse der Anbaueinheit gebildet und sind gegenüber dem eigentlichen Außendurchmesser stufenförmig abgesetzt. Die stufenförmigen Absätze sind in Figur 2 mit den Bezugszeichen 7 und 8 bezeichnet und bieten den Vorteil, dass der Schrumpfring 4 vollständig in die Gehäuse 5 und 6 eingelassen ist. Dadurch ergibt sich für die aus Elektromotor 1 und Anbaueinheit 2 bestehende Baugruppe ein einheitlicher Außendurchmesser.

Wie ebenfalls in Figur 2 zu erkennen ist, ist in den vom Schrumpfring 4 überdeckten Bereich 10 des Elektromotorgehäuses eine umlaufende Nut 13 eingebracht, in die eine entsprechende Feder 12 des Schrumpfrings 4 eingreift. Auf diese Art und Weise ist ein sicherer Formschluss in axialer Richtung zwischen Elektromotorgehäuse 5 und Schrumpfring 4 gewährleistet. Eine entsprechende Nut 14 ist auch in den vom Schrumpfring 4 überdeckten Bereich 11 des Gehäuses 6 der Anbaueinheit eingebracht. Auch in diese Nut 14 greift eine entsprechende Feder 12 des Schrumpfrings 4 ein. Die beiden Federn 12 des Schrumpfrings 4 befinden sich jeweils auf dessen Innenseite 9, wobei die in die Nut 13 des Elektromotorgehäuses 5 eingreifende Nut an einem axialen Ende des Schrumpfrings, und die zweite in die Nut 14 des Gehäuses 6 eingreifende Feder am anderen axialen Ende des Schrumpfrings angeordnet sind. Die beiden Nuten 13 und 14 bilden somit einen Hinterschnitt, der ein Abrutschen des Schrumpfrings nach dem Aufschrumpfvorgang auch unter Krafteinwirkung verhindert.

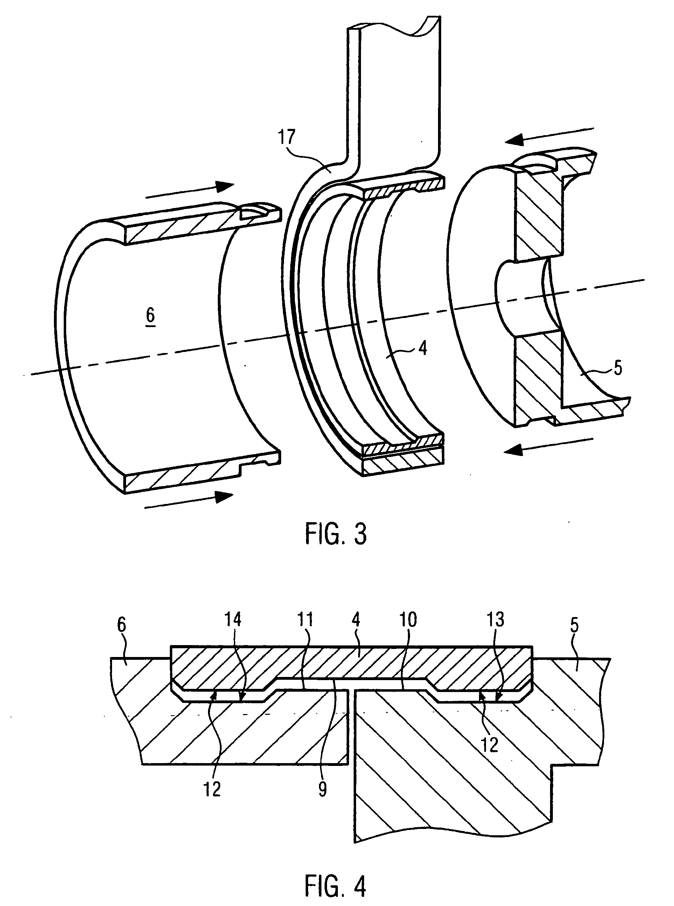

Das Verfahren zur Herstellung der Verbindung zwischen Elektromotor 1 und Anbaueinheit 2 wird im Folgenden anhand der Figuren 3 bis 5 erläutert.

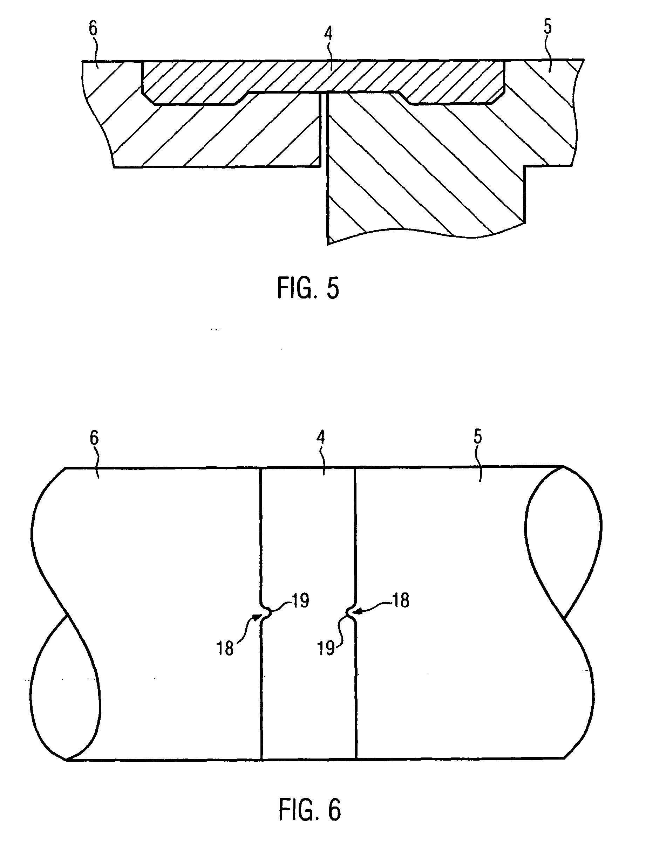

Der Schrumpfring 4 wird zunächst mittels der in Figur 3 dargestellten Induktionsspule 17, die den Schrumpfring vollständig umschließt, auf etwa 200° C aufgeheizt. Elektromotorgehäuse 5 und Gehäuse 6 der Anbaueinheit werden bei Raumtemperatur belassen. Wie Figur 4 zeigt, weitet sich der Schrumpfring aufgrund der resultierenden Temperaturdifferenz von ca. 175° C derart, dass der Innendurchmesser der Federn 12 in etwa dem größten Außendurchmesser der vom Schrumpfring überdeckten Bereiche 10 und 11 entspricht. Dadurch können die beiden Gehäuse 5 und 6 wie in Figur 3 dargestellt in den Schrumpfring 4 eingeschoben bzw. eingepresst werden. Um den Fügeprozess zu vereinfachen, sind die beiden Federn 12 des Schrumpfrings 4, genauso wie die Nuten 13 und 14, angefast. Die Bauteile 4, 5 und 6 müssen sodann lediglich in ihrer Position gehalten werden, bis der Schrumpfring 4 erkaltet und auf die Bereiche 10 und 11 aufgeschrumpft ist. Dieser Zustand ist in Figur 5 dargestellt.

Figur 6 zeigt eine Seitenansicht eines erfindungsgemäßen Elektromotors mit Anbaueinheit gemäß den Figuren 1 und 2 mit Formschlusselementen zur Herstellung eines zusätzlichen Formschlusses in Umfangsrichtung. Der Schrumpfring 4 weist hierzu an seinen beiden Stirnseiten jeweils eine Kerbe 19 auf, in die eine entsprechende Nase 18 des Elektromotorgehäuses 5 bzw. des Gehäuses 6 der Anbaueinheit formschlüssig eingreift. Dadurch wird eine Verdrehung zwischen Elektromotor und Anbaueinheit unterbunden. Die Formschlusselemente zur Herstellung des Formschlusses in Umfangsrichtung können auch auf der in Figur 2 gezeigten Innenseite 9 des Schrumpfrings und auf den entsprechenden gegenüberliegenden überdeckten Bereichen 10 und 11 der beiden Gehäuse 5 und 6 vorgesehen sein.

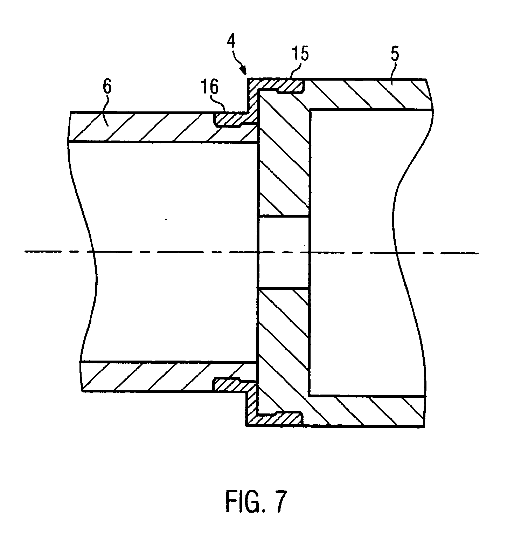

Figur 7 zeigt ein weiteres Ausführungsbeispiel eines erfindungsgemäßen Elektromotors mit Anbaueinheit, wobei das Gehäuse 5 des Elektromotors einen größeren Außendurchmesser aufweist als das Gehäuse 6 der Anbaueinheit. Die Verbindung mittels Schrumpfring 4 entspricht im Wesentlichen der Verbindung gemäß den Figuren 1 und 2, wobei der Schrumpfring einen ersten Abschnitt 15 aufweist, der an den Außendurchmesser des Gehäuses angepasst ist und ferner einen zweiten Abschnitt 16, der an den kleineren Außendurchmesser des Gehäuses 6 angepasst ist. Zwischen erstem Abschnitt 15 und zweitem Abschnitt 16 besteht ein stufenförmiger Übergang, der jedoch bei besonders großen Unterschieden in den Außendurchmessern der beiden Gehäuse 5 und 6 auch als stetige, beispielsweise konische, Erweiterung ausgeführt sein kann.

## Patentansprüche

1. Elektromotor (1) mit einer Anbaueinheit (2), insbesondere Getriebeeinheit, Encodereinheit oder Controllereinheit, wobei Elektromotor (1) und Anbaueinheit (2) fest miteinander verbunden sind, **dadurch gekennzeichnet, dass** zur festen Verbindung auf Elektromotor (1) und Anbaueinheit (2) im Bereich der Verbindungsstelle (3) ein Schrumpfring (4) thermisch aufgeschrumpft ist, so dass der Schrumpfring (4) die Verbindungsstelle (3) überdeckt.

2. Elektromotor (1) nach Anspruch 1, **dadurch gekennzeichnet, dass** der Schrumpfring (4) kraftschlüssig auf Elektromotor (1) und Anbaueinheit (2) aufgeschrumpft ist.

3. Elektromotor (1) nach Anspruch 1 oder 2, **dadurch gekennzeichnet, dass** Elektromotor (1) und Anbaueinheit (2) im Bereich der Verbindungsstelle (3) umlaufend stufenförmig abgesetzt sind, wobei der Schrumpfring (4) in den stufenförmigen Absätzen (7, 8) aufgenommen ist.

4. Elektromotor (1) nach einem der Ansprüche 1 bis 3, **dadurch gekennzeichnet, dass** die Innenseite (9) des Schrumpfrings (4) und/oder die vom Schrumpfring (4) überdeckten Bereiche (10, 11) von Elektromotor (1) und Anbaueinheit (2) aufgeraut sind.

5. Elektromotor (1) nach einem der Ansprüche 1 bis 4, **dadurch gekennzeichnet, dass** der Schrumpfring (4) und die vom Schrumpfring (4) überdeckten Bereiche (10, 11) von Elektromotor (1) und Anbaueinheit (2) Formschlusselemente (12, 13, 14, 18, 19) aufweisen, wobei die Formschlusselemente (12, 19) des Schrumpfrings (4) und die Formschlusselemente (13, 14, 18) der überdeckten Bereiche (10, 11) ineinandergreifen.

6. Elektromotor (1) nach Anspruch 5, **dadurch gekennzeichnet, dass** Elektromotor (1) und Anbaueinheit (2) jeweils eine umlaufende Nut (13, 14) aufweisen, in die jeweils eine entsprechende umlaufende Feder (12) des Schrumpfrings (4) eingreift.

7. Elektromotor (1) nach einem der Ansprüche 1 bis 6, **dadurch gekennzeichnet, dass** Elektromotor (1) und Anbaueinheit (2) zumindest im Bereich der Verbindungsstelle (3) unterschiedliche Durchmesser aufweisen, wobei der Schrumpfring (4) einen an den Durchmesser des Elektromotors (1) angepassten ersten Abschnitt (15) und einen an den Durchmesser der Anbaueinheit (2) angepassten zweiten Abschnitt (16) aufweist.

8. Elektromotor (1) nach einem der Ansprüche 1 bis 7, **dadurch gekennzeichnet, dass** Elektromotor (1) und Anbaueinheit (2) zumindest im Bereich der Verbindungsstelle (3) aus einem Material mit einem geringeren Wärmeausdehnungskoeffizienten als dem Wärmeausdehnungskoeffizienten des Materials des Schrumpfrings (4) bestehen.

9. Elektromotor (1) nach Anspruch 8, **dadurch gekennzeichnet, dass** Elektromotor (1) und Anbaueinheit (2) zumindest im Bereich der Verbindungsstelle (3) aus Stahl bestehen, wobei der Schrumpfring (4) aus Aluminium besteht.

10. Verfahren zum Verbinden eines Elektromotors (1) mit einer Anbaueinheit (2), insbesondere Getriebeeinheit, Encodereinheit oder Controllereinheit, insbesondere nach einem der Ansprüche 1 bis 9, **dadurch gekennzeichnet, dass** zur Verbindung von Elektromotor (1) und Anbaueinheit (2) im Bereich der Verbindungsstelle (3) ein Schrumpfring (4) thermisch aufgeschrumpft wird, so dass der Schrumpfring (4) die Verbindungsstelle (3) überdeckt, indem der Schrumpfring (4) auf der einen Seite und Elektromotor (1) sowie Anbaueinheit (2) auf der anderen Seite zunächst auf eine Temperaturdifferenz gebracht werden, wobei die Temperatur des Schrumpfrings (4) größer ist als die Temperatur von Elektromotor (1) und Anbaueinheit (2), und die Bauteile sodann zusammengefügt und gehalten werden, sodass der Schrumpfring (4) auf Elektromotor (1) und Anbaueinheit (2) aufschrumpft.

11. Verfahren nach Anspruch 10, **dadurch gekennzeichnet, dass** das Innenmaß des aufzuschrumpfenden Schrumpfrings (4) bei Raumtemperatur geringfügig kleiner ist als das jeweilige Außenmaß der vom Schrumpfring (4) überdeckten Bereiche (10, 11) von Elektromotor (1) und Anbaueinheit (2), wobei die Temperaturdifferenz so bemessen ist, dass der Unterschied zwischen dem Außenmaß der vom Schrumpfring (4) überdeckten Bereiche (10, 11) und dem Innenmaß des Schrumpfrings (4) nach Herstellen der Temperaturdifferenz zumindest soweit reduziert ist, dass der Schrumpfring (4) auf Elektromotor (1) und Anbaueinheit (2) aufgeschoben werden kann.

12. Verfahren nach Anspruch 11, **dadurch gekennzeichnet, dass** die Temperaturdifferenz im Bereich zwischen 100° C und 300° C, vorzugsweise bei 175° C, liegt.

13. Verfahren nach einem der Ansprüche 10 bis 12, **dadurch gekennzeichnet, dass** der Schrumpfring (4) zum Erreichen der Temperaturdifferenz aufgeheizt wird, wobei Elektromotor (1) und Anbaueinheit (2) bei Raumtemperatur bleiben.

14. Verfahren nach einem der Ansprüche 10 bis 13, **dadurch gekennzeichnet, dass** der Schrumpfring (4) mittels Induktion aufgeheizt wird.

## Claims

1. Electric motor (1) with an add-on unit (2), particularly a gearbox unit, encoder unit or controller unit, wherein the electric motor (1) and add-on unit (2) are firmly connected to each other, **characterised in that** for a firm connection, a shrink ring (4) is thermally shrunk on to the electric motor (1) and add-on unit (2) in the area of the joint (3) so that the shrink ring (4) covers the joint (3).

2. Electric motor (1) according to Claim 1 **characterised in that** the shrink ring (4) is shrunk on to the electric motor (1) and add-on unit (2) in a frictional locking.

3. Electric motor (1) according to Claim 1 or 2 **characterised in that** the electric motor (1) and add-on unit (2) are trimmed circumferentially in a step-like manner in the area of the joint (3), wherein the shrink ring (4) is held in the step-like recesses (7, 8).

4. Electric motor (1) according to one of the Claims 1 to 3 **characterised in that** the inner side (9) of the shrink ring (4) and / or the areas (10, 11) of the electric motor (1) and add-on unit (2) covered by the shrink ring (4) are roughened.

5. Electric motor (1) according to one of the Claims 1 to 4 **characterised in that** the shrink ring (4) and areas (10, 11) of the electric motor (1) and add-on unit (2) covered by the shrink ring (4) have positive-locking elements (12, 13, 14, 18, 19), wherein the positive-locking elements (12, 19) of the shrink ring (4) and the positive-locking elements (13, 14, 18) of the covered areas (10, 11) engage in one another.

6. Electric motor (1) according to Claim 5 **characterised in that** the electric motor (1) and add-on unit (2) each has a circumferential groove (13, 14) into which a corresponding circumferential tongue (12) of the shrink ring (4) engages.

7. Electric motor (1) according to one of the Claims 1 to 6 **characterised in that** the electric motor (1) and add-on unit (2) have different diameters, at least in the area of the joint (3), wherein the shrink ring (4) has a first section (15) adapted to the diameter of the electric motor (1) and a second section (16) adapted to the diameter of the add-on unit (2).

8. Electric motor (1) according to one of the Claims 1 to 7 **characterised in that** the electric motor (1) and add-on unit (2), at least in the area of the joint (3), are made of a material with a lower thermal expansion coefficient than the thermal expansion coefficient of the material of the shrink ring (4).

9. Electric motor (1) according to Claim 8 **characterised in that** the electric motor (1) and add-on unit (2) are made of steel, at least in an area of the joint (3), wherein the shrink ring (4) is made of aluminium.

10. Method for connecting an electric motor (1) and an add-on unit (2), particularly a gearbox unit, encoder unit or controller unit, particularly according to one of the Claims 1 to 9, **characterised in that** for connecting the electric motor (1) and add-on unit (2), a shrink ring (4) is thermally shrunk on in the area of the joint (3) so that the shrink ring (4) covers the joint (3) **in that** a temperature difference is first created between the shrink ring (4) on the one hand and the electric motor (1) as well as add-on unit (2) on the other hand, wherein the temperature of the shrink ring (4) is greater than the temperature of the electric motor (1) and add-on unit (2), and the components are then joined together and held so that the shrink ring (4) shrinks on to the electric motor (1) and add-on unit (2).

11. Method according to Claim 10 **characterised in that** the inner dimension of the shrink ring (4) that is to be shrunk on is slightly less at room temperature than the respective outer dimension of the areas (10, 11) of the electric motor (1) and add-on unit (2) that are covered by the shrink ring (4), wherein the temperature difference is dimensioned in such a way that the difference between the outer dimension of the areas (10, 11) covered by the shrink ring (4) and the inner dimension of the shrink ring (4) after the temperature difference has been produced is reduced at least to the point that the shrink ring (4) can be slid onto the electric motor (1) and add-on unit (2).

12. Method according to Claim 11 **characterised in that** the temperature difference lies in the range between 100° C and 300° C, preferably at 175° C.

13. Method according to one of the Claims 10 to 12 **characterised in that** the shrink ring (4) is heated to achieve the temperature difference, wherein the electric motor (1) and add-on unit (2) remain at room temperature.

14. Method according to one of the Claims 10 to 13 **characterised in that** the shrink ring (4) is heated by means of induction.

## Revendications

1. Moteur électrique (1) avec une unité d'extension (2), en particulier une unité de transmission, une unité à encodeur ou une unité à contrôleur, dans lequel le moteur électrique (1) et l'unité d'extension (2) sont fermement connectés entre eux, **caractérisé en ce que**, pour une connexion ferme, une bague de frettage (4) est sertie thermiquement sur le moteur électrique (1) et l'unité d'extension (2) dans la zone de la jonction (3) de telle sorte que la bague de frettage (4) recouvre la jonction (3).

2. Moteur électrique (1) selon la revendication 1, **caractérisé en ce que** la bague de frettage (4) est sertie par engagement de force sur le moteur électrique (1) et l'unité d'extension (2).

3. Moteur électrique (1) selon la revendication 1 ou 2, **caractérisé en ce que** le moteur électrique (1) et l'unité d'extension (2) présentent une forme circonférentielle étagée dans la zone de la jonction (3), dans lequel la bague de frettage (4) est reçue dans les renfoncements étagés (7, 8).

4. Moteur électrique (1) selon l'une des revendications 1 à 3, **caractérisé en ce que** les côtés internes (9) de la bague de frettage (4) et/ou des zones (10, 11) du moteur électrique (1) et de l'unité d'extension (2) recouvertes par la bague de frettage (4) sont rendus rugueux.

5. Moteur électrique (1) selon l'une des revendications 1 à 4, **caractérisé en ce que** la bague de frettage (4) et les zones (10, 11) du moteur électrique (1) et de l'unité d'extension (2) recouvertes par la bague de frettage (4) comportent des éléments à engagement de forme (12, 13, 14, 18, 19), dans lequel les éléments à engagement de forme (12, 19) de la bague de frettage (4) et les éléments à engagement de forme (13, 14, 18) des zones recouvertes (10, 11) s'engagent les uns dans les autres.

6. Moteur électrique (1) selon la revendication 5, **caractérisé en ce que** le moteur électrique (1) et l'unité d'extension (2) comportent chacun une rainure circonférentielle (13, 14) dans laquelle s'engage respectivement une languette circonférentielle correspondante (12) de la bague de frettage (4).

7. Moteur électrique (1) selon l'une des revendications 1 à 6, **caractérisé en ce que** le moteur électrique (1) et l'unité d'extension (2) présentent des diamètres différents au moins dans la zone de la jonction (3), dans lequel la bague de frettage (4) présente une première section (15) adaptée au diamètre du moteur électrique (1) et une deuxième section (16) adaptée au diamètre de l'unité d'extension (2).

8. Moteur électrique (1) selon l'une des revendications 1 à 7, **caractérisé en ce que** le moteur électrique (1) et l'unité d'extension (2) sont constitués, au moins dans la zone de la jonction (3), en un matériau dont le coefficient de dilatation thermique est inférieur au coefficient de dilatation thermique du matériau de la bague de frettage (4).

9. Moteur électrique (1) selon la revendication 8, **caractérisé en ce que** le moteur électrique (1) et l'unité d'extension (2) sont constitués d'acier au moins dans la zone de la jonction (3), dans lequel la bague de frettage (4) est constituée d'aluminium.

10. Procédé de connexion d'un moteur électrique (1) avec une unité d'extension (2), en particulier une unité de transmission, une unité à encodeur ou une unité à contrôleur, en particulier selon l'une des revendications 1 à 9, **caractérisé en ce qu'**une bague de frettage (4) est frettée thermiquement dans la zone de la jonction (3) pour connecter le moteur électrique (1) et l'unité d'extension (2), de telle sorte que la bague de frettage (4) recouvre la jonction (3), moyennant quoi la bague de frettage (4) d'une part et le moteur électrique (1) ainsi que l'unité d'extension (2) d'autre part sont d'abord amenés à une différence de température, dans lequel la température de la bague de frettage (4) est supérieure à la température du moteur électrique (1) et de l'unité d'extension (2), et les composants sont ainsi assemblés et maintenus de telle sorte que la bague de frettage (4) est frettée sur le moteur électrique (1) et l'unité d'extension (2).

11. Procédé selon la revendication 10, **caractérisé en ce que** la dimension interne de la bague de frettage (4) à fretter est, à température ambiante, légèrement inférieure à la dimension externe respective des zones (10, 11) du moteur électrique (1) et de l'unité d'extension (2) recouvertes par la bague de frettage (4), dans lequel la différence de température est mesurée de telle sorte que la différence entre la dimension externe des zones (10, 11) recouvertes par la bague de frettage (4) et la dimension interne de la bague de frettage (4), après l'établissement de la différence de température, est au moins réduite de telle sorte que la bague de frettage (4) peut être glissée sur le moteur électrique (1) et l'unité d'extension (2).

12. Procédé selon la revendication 11, **caractérisé en ce que** la différence de température est comprise dans une plage de 100 °C à 300 °C, et est de préférence proche de 175 °C.

13. Procédé selon l'une des revendications 10 à 12, **caractérisé en ce que** la bague de frettage (4) est chauffée pour atteindre la différence de température, dans lequel le moteur électrique (1) et l'unité d'extension (2) restent à température ambiante.

14. Procédé selon l'une des revendications 10 à 13, **caractérisé en ce que** la bague de frettage (4) est chauffée par induction.
